# EUROPÄISCHE PATENTSCHRIFT

(11) **EP 1 419 356 B1**
(45) Veröffentlichungstag und Bekanntmachung des Hinweises auf die Patenterteilung: **22.04.2009**
(21) Anmeldenummer: 02767092.6
(22) Anmeldetag: 07.08.2002
(51) Int. Cl.: F27D 17/00, C10J 3/86, F22B 1/18

(54) **VORRICHTUNG FÜR DEN EINTRITT VON HEISSGAS IN EIN HEIZFLÄCHENROHR EINES ABHITZEKESSELS**
DEVICE FOR INTRODUCING HOT GAS INTO A HEATING SURFACE PIPE OF A WASTE HEAT BOILER
DISPOSITIF POUR INTRODUIRE DES GAZ CHAUDS DANS UN TUBE A SURFACES CHAUDES D'UNE CHAUDIERE A RECUPERATION

(30) Priorität: 13.08.2001 DE 10138626
(43) Veröffentlichungstag der Anmeldung: 19.05.2004
(73) Patentinhaber: ALSTOM Power Energy Recovery GmbH, 34123 Kassel-Bettenhausen (DE)
(72) Erfinder: GOTTSCHALK, Horst, 40625 Düsseldorf (DE); SCHÖTZ, Michael, 51375 Leverkusen (DE)
(86) Internationale Anmeldenummer: PCT/DE2002/002895
(87) Internationale Veröffentlichungsnummer: WO 2003/016807

(56) Entgegenhaltungen:
- DE-C- 19 822 546

## Beschreibung

Die Erfindung bezieht sich auf eine Vorrichtung für den Eintritt von Heißgas in ein Heizflächenrohr eines Abhitzekessels mit einem mit der Kesselwandung, insbesondere mit dem Rohrboden, verbundenen Außenrohr, einem an dem Außenrohr über eine abgerundete Umkehrkappe unter Ausbildung einer Eintrittsöffnung für das Heißgas anschließenden und von dem Außenrohr mit Abstand umschlossenen Innen- bzw. Eintrittsrohr mit einem zylindrischen oder sich konisch verengendem Einströmabschnitt und einem mit dem Heizflächenrohr verbundenen Abströmabschnitt und mit einem zwischen Außenrohr und Innenrohr angeordneten Kühlmittel - Leitrohr, das sich bis in die Nähe der Umkehrkappe erstreckt.

In Abhitzekesseln bzw. Wärmetauschern werden Heißgase (wie z.B. Synthesegase aus partiellen Oxidationsanlagen) durch Kühlmittel abgekühlt und dabei in den häufigsten Fällen Dampf erzeugt. Die Wärmetauscher bestehen vorzugsweise aus mehreren parallel geschalteten geraden oder gebogenen bzw. gewendelten Heizflächensystemen, die aus einer Vielzahl von Heizflächenrohren gebildet sind.

Insbesondere die mit dem Heißgas beaufschlagten Wärmetauscher - Eintrittsbereiche sind thermisch sehr stark belastet. Aufgrund des hohen Systemdruckes des wärmeaufnehmenden Mediums (z. B Siedewasser) entstehen zusätzlich hohe mechanische Belastungen, die u.a. auch über die Eintrittsbereiche bzw. die Vorrichtungen für den Eintritt von Heißgas in die Heizflächenrohre abgetragen werden müssen.

Aus der Druckschrift "Verfahrenstechnik: Anlagen- und Apparatebau, Komponenten und Teilkreisläufe" (1986), Seite 19 der Fa. L. & C. Steinmüller ist eine Vorrichtung der gattungsgemäßen Art bekannt. Bei dieser bekannten Vorrichtung sind Bauteile vorhanden - insbesondere trifft dies auf die Umkehrkappen am Gaseintritt zu - , an denen unzulässig hohe Oberflächentemperaturen und/oder unzulässig hohe mechanische und thermischen Spannungen auftreten können, die im weiteren zu einer Limitierung des gasseitigen Durchsatzes jeder einzelnen Vorrichtung für den Eintritt von Heißgas in ein Heizflächenrohr eines Abhitzekessels und konsequenterweise zur Limitierung des gasseitigen Durchsatzes im nachfolgenden Heizflächenrohr und somit des ganzen Abhitzekessels führen kann. Aus zu hohen Oberflächentemperaturen ergeben sich vielfältige Risiken hinsichtlich unterschiedlichster Korrosionsmechanismen.

Durch Druckschrift DE 198 22 546 C1 ist eine Vorrichtung für den Eintritt von Heißgas in ein Heizflächenrohr eines Abhitzekessels mit einem mit der Kesselwandung, insbesondere mit dem Rohrboden, verbundenen Außenrohr, einem an dem Außenrohr über eine abgerundete Umkehrkappe unter Ausbildung einer Eintrittsöffnung für das Heißgas anschließenden und von dem Außenrohr mit Abstand umschlossenen Innen- bzw. Eintrittsrohr mit einem zylindrischen oder sich konisch verengendem Einströmabschnitt und einem mit dem Heizflächenrohr verbundenen Abströmabschnitt und mit einem zwischen Außenrohr und Innenrohr angeordneten Kühlmittel - Leitrohr, das sich bis in die Nähe der Umkehrkappe erstreckt, bekannt geworden. Wegen des hohen Innendruckes des wassergefüllten Kessels und wegen der Rohrgeometrie sind die Wandstärken des Außenmantels bzw. Außenrohres und des Umlenkbereiches dieser bekannten Vorrichtung verdickt ausgebildet. Um die in diesem Bereich durch die zu verdickten Wandstärken entstehenden zu hohen Wandtemperaturen zu beherrschen bzw. abzusenken ist bei dieser Vorrichtung vorgeschlagen worden, daß zumindest der Außenmantel im Bereich seiner Verdickung auf seiner Innenseite mit in Umfangsrichtung im wesentlichen gleichmäßig verteilten und sich im wesentlichen in axialer Richtung erstreckenden Rinnen versehen ist.

Es ist die Aufgabe der vorliegenden Erfindung eine Vorrichtung für den Eintritt von Heißgas in ein Heizflächenrohr eines Abhitzekessels zu schaffen, die die vorgenannten Nachteile vermeidet. Insbesondere soll eine Vorrichtung geschaffen werden, die es erlaubt,
- hinsichtlich der Korrosionsmechanismen kritische Bauteile möglichst dünnwandig auszuführen, sodaß Korrosion vermieden werden kann,
- die Anzahl der von jeweils einer Eintritts-Vorrichtung mit Heißgas gespeisten erforderlichen Heizflächenrohre eines Abhitzekessels bzw. Wärmetauschers zu minimieren,
- sowie die aus den sehr hohen Kühlmedium- bzw. Wasserdrücken (bis ca. 150 bar) resultierenden Kräfte an den Bauteilen der Vorrichtung sicher zu beherrschen.

Die vorstehend genannte Aufgabe wird durch die kennzeichnenden Merkmale des Patentanspruches 1 gelöst.

Vorteilhafte Ausgestaltungen der Erfindung sind den Unteransprüchen zu entnehmen.

Durch die erfindungsgemäße Lösung wird eine Vorrichtung für den Eintritt von Heißgas in ein Heizflächenrohr eines Abhitzekessels geschaffen, die die nachfolgenden Vorteile aufweist:
- Die Lastabtragung von Kräften, hervorgerufen durch den Kühlmitteldruck bzw. aus thermischen Spannungen, über das Kühlmittel-Leitrohr erlaubt eine heißgasseitig strömungstechnisch optimierte Gestaltung des Umkehrkappenbereiches der Vorrichtung für den Eintritt von Heißgas in ein Heizflächenrohr eines Abhitzekessels (z. B. eine trompetenförmige Aufweitung), ohne daß dieser Bereich verdickt bzw. verstärkt ausgeführt werden müsste. Dadurch verringert sich das Korrosionsrisiko an dem Bauteil.
- Im Umkehrkappenbereich können minimale Wanddicken realisiert werden, da die Summe aus mechanischen und thermischen Belastungen an dieser Stelle deutlich reduziert ist.
- Die Lage höchster thermischer Belastungen ist von der Lage höchster mechanischer Spannungen entkoppelt und durch die Wahl des Lastabtragungspunktes speziell im Bereich des Eintrittskonus bzw. -zylinders der Vorrichtung für den Eintritt von Heißgas in ein Heizflächenrohr eines Abhitzekessels wurde der Ort gewählt, der thermisch am geringsten im gesamten Eintrittsbereich belastet ist.
- Der Umkehrkappenbereich kann wesentlich einfacher inspiziert und gereinigt werden, da keine Einbauten im Umkehrbereich stören.
- Der Umkehrkappenbereich kann als Einzelstück mit relativ einfachen Mitteln in kurzer Zeit ausgetauscht werden.
- Entkopplung des höchstbelasteten Umkehrkappenbereiches im Hinblick auf die Einleitung thermischer und mechanischer Spannungen.
- Die Positionierung des Kühlmittel - Leitbleches der Vorrichtung für den Eintritt von Heißgas in ein Heizflächenrohr eines Abhitzekessels ist zu jeder Zeit eindeutig, da es mechanisch stabil ausgeführt und in der Lage nicht veränderlich ist.
- Einfachere Möglichkeit der wasserseitigen Reinigung der Umkehrkappen von eventuellen Verunreinigungen.
- Der Gasdurchsatz durch eine erfindungsgemäße Vorrichtung für den Eintritt von Heißgas in ein Heizflächenrohr eines Abhitzekessels kann gegenüber einer ungestützten Vorrichtung für den Eintritt von Heißgas in ein Heizflächenrohr eines Abhitzekessels mit erheblich höheren Massendurchsätzen beaufschlagt werden (Faktor des Mehrdurchsatzes in etwa das 2- bis 4-fache), wobei konstruktiv weiteres Potential zur Vergrößerung der Eintrittsgeometrie gegeben ist.

In vorteilhafter Weise sind die Längsachsen der Verbindungsrippen jeweils parallel mit der Vorrichtung - Längsachse und die Verbindungsrippen radial ausgerichtet. Damit können zum einen die zu übertragenden Kräfte gut ein- bzw. übergeleitet werden und zum anderen sind die Kühlmittel-Strömungswiderstände dadurch minimiert.

In vorteilhafter Ausgestaltung der Erfindung nimmt die Länge ( L ) der Verbindungsrippe zumindest einen Teilbereich der Länge des Leitrohres bzw. der Vorrichtung ein. Durch diese Maßnahme kann die Länge der Verbindungsrippen voll auf die Anforderungen der konstruktiven Ausgestaltung und den zu übertragenden Kräften abgestimmt werden.

Da die auf die Vorrichtung einwirkenden Kräfte in erster Linie am Gaseintrittsbereich wirken, sind bei einer vorteilhaften Ausbildung der Erfindung die Verbindungsrippen im Bereich des konischen oder zylindrischen Eintrittsabschnittes angeordnet. Durch diese Maßnahme werden die Kräfte direkt am Ort des Einwirkens abgeleitet.

Um Verwirbelungen beim Durchtritt des Kühlmittels durch den Bereich der Vorrichtung zu minimieren bzw. zu verhindern, in dem das Kühlmittel die Verbindungsrippen innerhalb des kreisringförmigen Strömungsquerschnitt passiert sowie daraus entstehende Druckverluste ebenfalls zu minimieren werden die Verbindungsrippen bzw. deren Anström- bzw. Abströmfläche in Strömungsrichtung des Kühlmediums gesehen bevorzugt strömungsgünstig ausgebildet.

Um bei einer Vorrichtung mit einer festen bzw. einer losen Verbindung zwischen Außen- bzw. Innenrohr und Leitrohr die auftretenden Kräfte optimal in das Leitrohr einzuleiten bzw. diese aus dem Leitrohr abzuleiten werden die Verbindungsrippen zwischen Innenrohr und Leitrohr in Strömungsrichtung des Heißgases gesehen vorteilhaft stromauf- bzw. stromabwärts der Verbindungsrippen zwischen Außenrohr und Leitrohr angeordnet.

Für eine optimale konstruktive Ausbildung der Vorrichtung werden ferner vorzugsweise querschnittseitig die Verbindungsrippen zwischen Außenrohr und Leitrohr zu den Verbindungsrippen zwischen Innenrohr und Leitrohr angular versetzt angeordnet.

Damit bei den kreisringförmigen Strömungsquerschnitten zwischen Außen- und Leitrohr bzw. Leit- und Innenrohr im Bereich der Verbindungsrippen keine Querschnittsverengung eintritt, die Druckverluste im Kühlmedium nach sich ziehen würden, kann in bevorzugter Ausbildung der Erfindung der Querschnitt im Bereich der Verbindungsrippen radial erweitert werden, so dass er im wesentlichen dem Querschnitt stromauf- bzw. stromabwärts der Verbindungsrippen entspricht.

Die lose Verbindung zwischen Außen- bzw. Innenrohr und Leitrohr wird vorteilhaft ausgestaltet, in dem das Leitrohr an seinem Außen- und Innenumfang mit Nuten zur Aufnahme der jeweiligen Verbindungsrippen des Innen- bzw. des Außenrohres ausgebildet ist. Damit wird eine Verbindung geschaffen, die klar definiert ist und deren Herstellung und Montage dadurch vereinfacht ist. In bevorzugter Ausbildung sind dabei die Verbindungsrippen innerhalb der Nuten in radialer Richtung verschiebbar gelagert.

Es zeigt:
- Fig. 1: einen vertikalen Teilschnitt durch eine Ausführungsform der erfindungsgemäßen Vorrichtung, wobei die Darstellung mit dem Bild oben: "Gekühlter konischer Eintrittsbereich in die Heizflächenrohre " auf S. 19 der angezogenen Druckschrift vergleichbar ist.
- Fig. 2: einen im wesentlichen horizontalen Querschnitt gemäß Schnitt A-A der Figur 1,
- Fig. 3: wie Figur 2, jedoch alternative Ausführung,
- Fig. 4: wie Figur 2, jedoch alternative Ausführung,

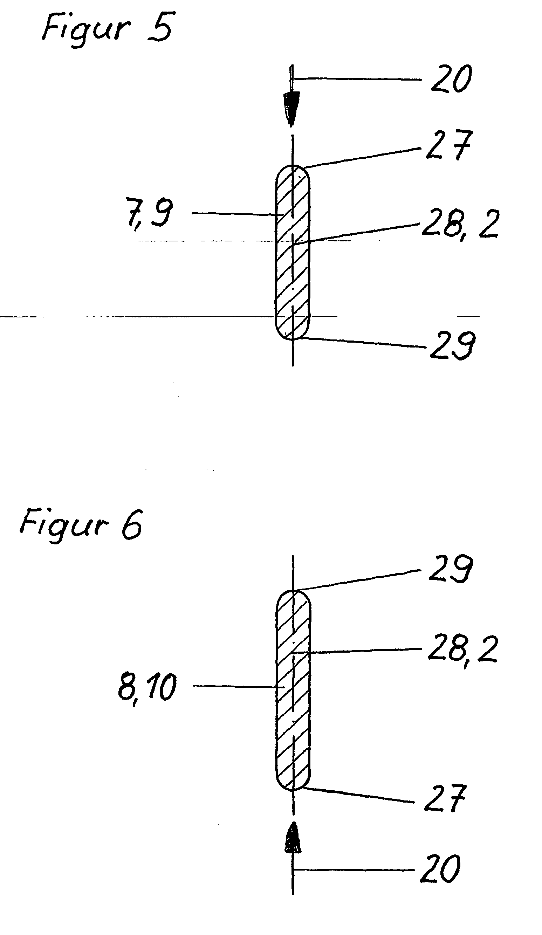

- Fig. 5: einen Längsschnitt durch eine Verbindungsrippe zwischen Außen- und Leitrohr gemäß Schnitt B-B der Figur 1,
- Fig. 6: einen Längsschnitt durch eine Verbindungsrippe zwischen Innen- und Leitrohr gemäß Schnitt C-C der Figur 1.

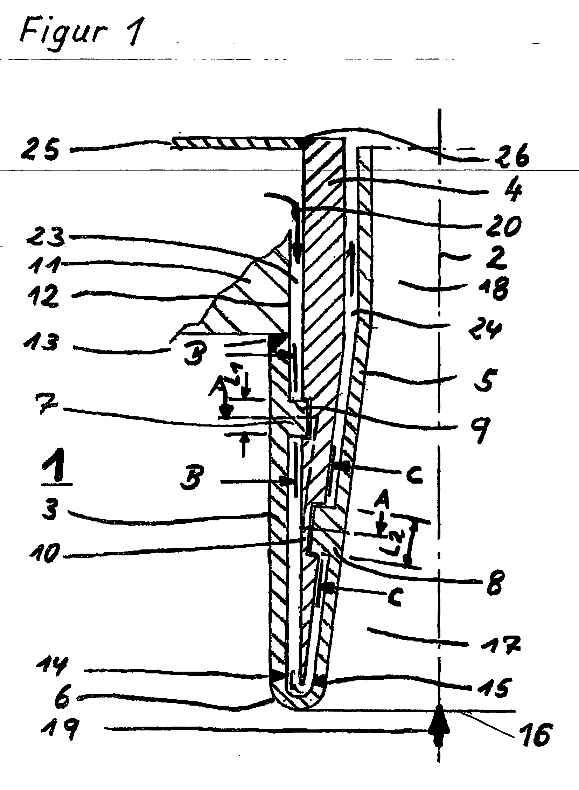

Wie bei der in der Druckschrift angesprochenen Figur ist in der dargestellten Figur 1 von dem Abhitzekessel nur ein Teil der Behälterwandung, und zwar der Rohrboden 11 dargestellt, mit dem im Bereich einer Bohrung 12 eine Vorrichtung 1 für den Eintritt des Heißgases 19 in ein nicht dargestelltes Heizflächenrohr des Abhitzekessels mittels einer Schweißung 13 verbunden ist. Zu der Vorrichtung 1 gehört ein Außenrohr 3 und ein von dem Außenrohr 3 umgebendes Innen- bzw. Eintrittsrohr 5, die über eine abgerundete Umkehrkappe 6 miteinander verbunden sind. Bei in Figur 1 dargestellten Ausführungsform ist die Umkehrkappe 6 - sie bewirkt eine im wesentlichen 180 ° Umlenkung des Kühlmittels 20 innerhalb der Vorrichtung 1 - als ein Teil ausgebildet, der im Umkehrbereich der Vorrichtung 1 liegt und mittels Schweißung 14 mit dem Außenrohr 3 und mittels Schweißung 15 mit dem Innenrohr 5 verbunden ist. Die Umkehrkappe 6 bestimmt eine Gaseintrittsöffnung 16 in das Innen- bzw. Eintrittsrohr 5. Das Innenrohr 5 weist am Eintritt einen sich konisch verengenden Abschnitt 17 auf, der in einen mit dem Heizflächenrohr verbundenen geradzylindrischen Abströmabschnitt 18 übergeht und durch die das Heißgas 19 strömt. Entgegen der Darstellung der Figur 1 kann der sich konisch verengende Abschnitt 17 auch zylindrisch ausgebildet sein. Die räumliche Erstreckung der Vorrichtung 1 für den Eintritt von Heißgas in ein Heizflächenrohr eines Abhitzekessels in deren Längsrichtung 2 definiert sich damit, dass sie sich gasseitig stromaufwärts des nicht dargestellten Heizflächenrohres erstreckt.

Zwischen Außenrohr 3 und Innenrohr 5 ist ein Kühlmittel - Leitrohr 4 angeordnet, dessen eines Ende gemäß der aufgezeigten Ausführungsform mittels einer Verbindung 26, die gemäß Figur 1 eine Schweißung sein kann, mit einem mit der Behälterwandung des Abhitzekessels in Verbindung stehenden Zwischenrohrbodens 25 verbunden ist und dessen freies Ende im Umlenkbereich der Umkehrkappe 6 endet. Das Leitrohr 4 ist derart ausgebildet, dass es Kräfte bzw. Lasten, die innerhalb der Vorrichtung 1 durch den hohen Druck des Kühlmittels 20, durch thermische Spannungen sowie den Gasdruck des Heißgases 19 gebildet werden, vom Innenrohr 5 aufnimmt und an das Außenrohr 5 überträgt, von wo aus die Kräfte in den Rohrboden 11, d. h. der Behälterwandung des Abhitzekessels abgeleitet werden. Zur Übertragung dieser Kräfte ist das Innenrohr 5 sowie das Außenrohr 3 mit Verbindungsrippen bzw. -nocken 7, 8 mit dem Leitrohr 4 entweder fest oder lose miteinander verbunden, wobei bei einer festen Verbindung die Vorrichtung 1 beispielsweise geschweißt, gefräst oder gegossen ausgebildet sein kann. Die Übertragung der Kräfte durch das Leitrohr 4 erfolgt vorzugsweise im Bereich des konischen (wie in Figur 1 dargestellt) bzw. zylindrischen (alternative Ausbildung) Eintrittsabschnittes 17 der Vorrichtung 1, wobei der konische bzw. zylindrische Eintrittsabschnitt 17 sich in axialer Richtung über 10 bis 80 % der Gesamtlänge der Vorrichtung 1 erstreckt. Bei einer festen wie auch bei einer losen Verbindung zwischen dem Leitrohr 4 und dem Außenrohr 3 bzw. dem Innenrohr 5 ist die Verbindungsrippe 8 zwischen Leitrohr 4 und Innenrohr 5 bevorzugt versetzt zu der Verbindungsrippe 7 zwischen Leitrohr 4 und Außenrohr 3 angeordnet, um eine optimierte Kraftübertragung vom Innenrohr 5 zum Außenrohr 3 zu erzielen.

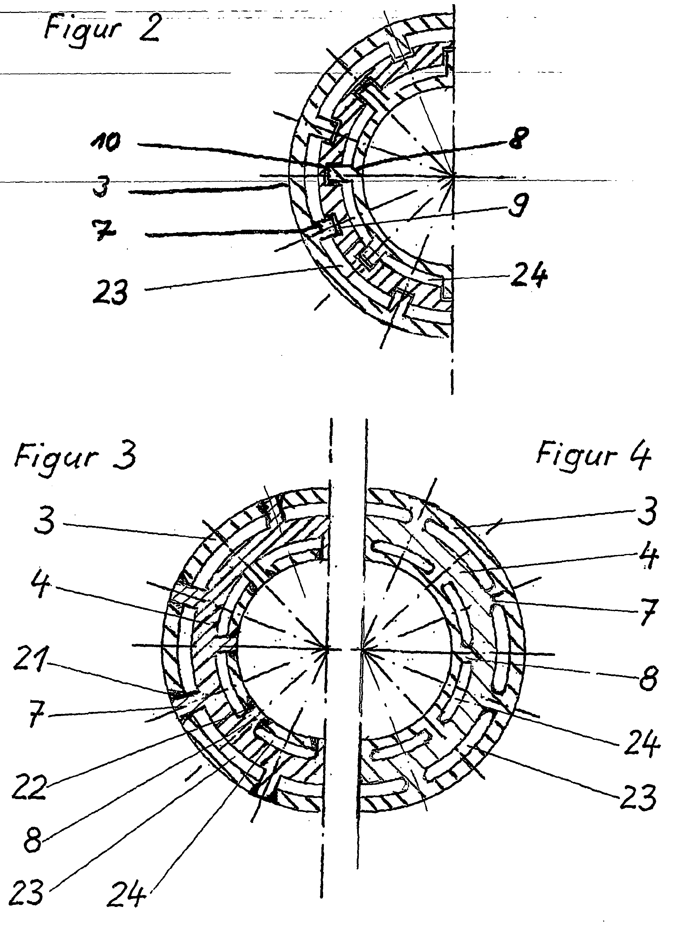

Figur 2 zeigt eine erfindungsgemäße Vorrichtung 1, bei der das Leitrohr über Verbindungsrippen 7, 8 lose mit dem Innenrohr 5 bzw. dem Außenrohr 3 verbunden ist. Das Innenrohr 5 ist dabei an seinem Außenumfang mit mehreren gleichmäßig über den Umfang verteilten und radial ausgerichteten Verbindungsrippen 8 ausgebildet, deren Längsachsen 28 jeweils parallel zu der Vorrichtungs-Längsachse 2 ausgerichtet sind. Die Verbindungsrippen 8, die eine Länge L₂ aufweisen, erstrecken sich zumindest über einen Teilbereich der Länge des Leitrohres 4 bzw. der Vorrichtung 1. Die vorstehenden Verbindungsrippen 8 werden von am Innenumfang des Leitrohres 4 angeordneten Nuten 10 aufgenommen, mit denen das Leitrohr 4 ausgebildet ist und die exakt den Verbindungsrippen 8 gegenüber liegen. Die Nuten 10 sind dermaßen ausgebildet, dass die Verbindungsrippen 8 des Innenrohres 5 innerhalb der Nuten 10 in radialer Richtung Bewegungsfreiheit haben, in axialer wie auch angularer Richtung jedoch festgehalten sind, d. h. dass eine schiebende Verbindung in radialer Richtung des Innen- 5 bzw. des Außenrohres 3 besteht. Die Verbindung zwischen Außenrohr 3 und Leitrohr 4 ist von der Anordnung und vom Aufbau wie die von letzterem mit dem Innenrohr 5, wobei hier die Verbindungsrippen 7 am Innenumfang des Außenrohres 3 angeordnet sind und radial nach innen in die am Außenumfang des Leitrohres 4 angeordneten Nuten 9 stehen. Auch hier besteht in radialer Richtung Bewegungsfreiheit, während in axialer und angularer Richtung die Rippen 7 festgehalten sind und die eine Länge L₁ aufweisen, die sich zumindest über einen Teilbereich der Länge des Leitrohres 4 bzw. der Vorrichtung 1 erstreckt. Die Längen L₁ und L₂ der Rippen 7, 8 können sich somit auch über die gesamte Länge des Leitrohres 4 bzw. der Vorrichtung 1 erstrecken. Über den Querschnitt der Vorrichtung 1 gesehen sind die Verbindungsrippen 7 gegenüber den Verbindungsrippen 8 angular versetzt zueinander ausgebildet, um eine optimierte Konstruktion zu erzielen.

Figuren 3 und 4 zeigen die erfindungsgemäße Vorrichtung mit einem Leitrohr 4, das mit dem Innenrohr 5 wie auch mit dem Außenrohr 3 fest verbunden ist. Während Figur 3 eine Schweißkonstruktion darstellt und die Verbindungsrippen 7, 8, die jeweils an dem Leitrohr 4 angebracht sind, mit dem Außenrohr 3 sowie dem Innenrohr 5 verschweißt sind, zeigt Figur 4 eine Gusskonstruktion auf. Ähnlich wie bei der losen Verbindung ist bei der verschweißten Ausführung das Leitrohr 4 an seinem Außenumfang und an seinem Innenumfang mit mehreren Verbindungsrippen 7, 8 ausgebildet, deren Längsachsen 28 jeweils parallel zu der Vorrichtungs-Längsachse 2 ausgerichtet sind und sich zumindest über einen Teilbereich der Länge des Leitrohres 4 bzw. der Vorrichtung 1 erstrecken, radial ausgerichtet und über den Umfang gleichmäßig verteilt sind. Die Verbindungsrippen 7, 8 sind dabei durch in dem Außen- bzw. Innenrohr 3, 5 befindliche Öffnungen 21, 22 gesteckt und mit den Rohren 3, 5 verschweißt.

Die Verbindungsrippen 7, 8 bzw. deren Anströmflächen 27 und Abströmflächen 29 sind bei fester wie bei loser Verbindung zwischen Leitrohr 4 und Innen- bzw. Außenrohr 3, 5 in Strömungsrichtung des Kühlmediums 20 gesehen (siehe Pfeilrichtung in Figur 1) strömungsgünstig ausgebildet, so dass durch die im kreisringförmigen Strömungsquerschnitt 23, 24 liegenden Verbindungsrippen 7, 8 nur geringe Strömungsverluste auftreten.

Zur Vermeidung von Strömungsquerschnittseinengungen und infolgedessen von Druckverlusten im Bereich der Verbindungsrippen 7 kann der kreisringförmige Querschnitt 23 (zwischen Außen- 3 und Leitrohr 4) im Bereich der Verbindungsrippen 7 im wesentlichen gleich groß ausgebildet werden wie der kreisringförmige Querschnitt 23 stromauf- bzw. stromabwärts der Verbindungsrippen 7. Hierzu ist die Tiefe des Querschnittes 23 im Bereich der Rippen 7 flächenmäßig um den Teil vergrößert, den in Summe die Fläche der vorhandenen Rippen 7 einnimmt. Für den kreisringförmigen Querschnitt 24 (zwischen Innen- 5 und Leitrohr 4) kann im Bereich der Verbindungsrippen 8 gleichermaßen verfahren werden.

Entgegen der Abbildung gemäß der Figur 1 kann die Gaseintrittsöffnung 16 auch torus- bzw. trompetenförmig aufgeweitet sein, um dadurch die Effizienz des Gaseintrittes in die Vorrichtung 1 gegebenenfalls zu erhöhen.

Durch die erfindungsgemäße Ausbildung der Vorrichtung 1 können minimale Wanddicken im Bereich des Innen- und Außenrohres 3, 5 sowie der Umkehrkappe 6 eingesetzt werden. Dadurch wird gleichzeitig die Gefahr von Korrosion an diesen Bauteilen minimiert. Durch die erfindungsgemäße Ausbildung wird es ferner ermöglicht, größere Eintrittsgeometrien an der Vorrichtung 1 zu erstellen gegenüber einer Vorrichtung gemäß dem Stand der Technik. Da auch die der Vorrichtung 1 nachgeschalteten Heizflächenrohre größer ausgeführt werden können, ergeben sich somit vorteilhafterweise größere Gasmassenströme, die je Kesseleinheit durchgesetzt werden können.

### Bezugszeichenliste:

- 1: Vorrichtung
- 2: Vorrichtungs - Längachse
- 3: Außenrohr
- 4: Leitrohr
- 5: Innenrohr
- 6: Umkehrkappe
- 7: Verbindungsrippe zwischen Außen- und Leitrohr
- 8: Verbindungsrippe zwischen Innen- und Leitrohr
- 9: Nut zur Aufnahme der Verbindungsrippen
- 10: Nut zur Aufnahme der Verbindungsrippen
- 11: Rohrboden
- 12: Bohrung
- 13: Schweißung
- 14: Schweißung
- 15: Schweißung
- 16: Gaseintrittsöffnung
- 17: Konischer oder zylindrischer Eintrittsabschnitt
- 18: Zylindrischer Abströmabschnitt
- 19: Heißgas
- 20: Kühlmittel
- 21: Öffnung
- 22: Öffnung
- 23: Kreisringförmiger Strömungsquerschnitt
- 24: Kreisringförmiger Strömungsquerschnitt
- 25: Zwischenrohrboden
- 26: Verbindung bzw. Schweißung
- 27: Anströmfläche
- 28: Längsachse der Verbindungsrippen
- 29: Abströmfläche

## Patentansprüche

1. Vorrichtung ( 1 ) für den Eintritt von Heißgas in ein Heizflächenrohr eines Abhitzekessels mit einem mit der Kesselwandung, verbundenen Außenrohr ( 3 ), einem an dem Außenrohr ( 3 ) über eine abgerundete Umkehrkappe (6 ) unter Ausbildung einer Eintrittsöffnung ( 16 ) für das Heißgas anschließenden und von dem Außenrohr ( 3 ) mit Abstand umschlossenen Innen- bzw. Eintrittsrohr ( 5 ) mit einem zylindrischen oder sich konisch verengendem Einströmabschnitt ( 17 ) und einem mit dem Heizflächenrohr verbundenen Abströmabschnitt ( 18 ) und mit einem zwischen Außenrohr ( 3 ) und Innenrohr ( 5 ) angeordneten Kühlmittel Leitrohr ( 4 ), das sich bis in die Nähe der Umkehrkappe ( 6 ) erstreckt, **dadurch gekennzeichnet, dass** das Leitrohr ( 4 ) zur Überleitung von am Innenrohr ( 5 ) angreifenden Kräften auf das Außenrohr (3 ) und daraus in die Kesselwandung sowohl mit dem Innenrohr ( 5 ) als auch mit dem Außenrohr ( 3 ) jeweils mit wenigstens drei über den Umfang gleichmäßig verteilten Verbindungsrippen ( 7, 8 ) lose oder fest verbunden ist.

2. Vorrichtung nach Anspruch 1, **dadurch gekennzeichnet, dass** die Längsachse ( 28 ) der Verbindungsrippen ( 7, 8 ) jeweils parallel ist mit der Vorrichtungs - Längsachse ( 2 ) und die Verbindungsrippen ( 7, 8 ) radial ausgerichtet sind.

3. Vorrichtung nach Anspruch 1 oder 2, **dadurch gekennzeichnet, dass** die Länge ( L ) der Verbindungsrippe ( 7, 8 ) einen Teilbereich der Länge oder die gesamte Länge des Leitrohres ( 4 ) bzw. der Vorrichtung ( 1 ) einnimmt.

4. Vorrichtung nach einem der Ansprüche 1 bis 3, **dadurch gekennzeichnet, dass** die Verbindungsrippen ( 7, 8 ) im Bereich des konischen oder zylindrischen Eintrittsabschnittes ( 17 ) angeordnet sind.

5. Vorrichtung nach einem der Ansprüche 1 bis 4, **dadurch gekennzeichnet, dass** die Anströmfläche ( 27 ) der Verbindungsrippen ( 7, 8 ) in Strömungsrichtung des Kühlmediums ( 20 ) gesehen strömungsgünstig ausgebildet ist.

6. Vorrichtung nach einem der Ansprüche 1 bis 5, **dadurch gekennzeichnet, dass** die Abströmfläche ( 29 ) der Verbindungsrippen ( 7, 8 ) in Strömungsrichtung des Kühlmediums ( 20 ) gesehen strömungsgünstig ausgebildet ist.

7. Vorrichtung nach einem der Ansprüche 1 bis 6, **dadurch gekennzeichnet, dass** bei einer festen Verbindung zwischen Außen- bzw. Innenrohr ( 3, 5 ) und Leitrohr ( 4 ) die Verbindungsrippen ( 7, 8 ) zwischen Innenrohr ( 5 ) und Leitrohr ( 4 ) in Strömungsrichtung des Heißgases ( 19 ) gesehen stromaufwärts oder stromabwärts der Verbindungsrippen ( 7, 8 ) zwischen Außenrohr ( 3 ) und Leitrohr ( 4 ) angeordnet sind.

8. Vorrichtung nach einem der Ansprüche 1 bis 7, **dadurch gekennzeichnet, dass** querschnittseitig die Verbindungsrippen ( 7 ) zwischen Außenrohr ( 3 ) und Leitrohr ( 4 ) angular versetzt zu den Verbindungsrippen ( 8 ) zwischen Innenrohr ( 5 ) und Leitrohr ( 4 ) angeordnet sind.

9. Vorrichtung nach einem der Ansprüche 1 bis 8, **dadurch gekennzeichnet, dass** der kreisringförmige Strömungsquerschnitt ( 23, 24 ) im Bereich der jeweiligen Verbindungsrippen ( 7, 8 ) gleich groß ist wie der kreisringförmige Strömungsquerschnitt ( 23, 24 ) stromauf- bzw. stromabwärts der jeweiligen Verbindungsrippen ( 7, 8 ).

10. Vorrichtung nach einem der Ansprüche 1 bis 9, **dadurch gekennzeichnet, dass** bei einer losen Verbindung zwischen Außen- bzw. Innenrohr ( 3, 5 ) und Leitrohr ( 4 ) das Leitrohr ( 4 ) an seinem Außen- und Innenumfang mit Nuten ( 9, 10 ) zur Aufnahme der jeweiligen Verbindungsrippen ( 7, 8 ) des Innen- bzw. des Außenrohres ( 3, 5 ) ausgebildet ist.

11. Vorrichtung nach Anspruch 10, **dadurch gekennzeichnet, dass** die Verbindungsrippen ( 7, 8 ) innerhalb der Nuten ( 9, 10 ) in radialer Richtung verschiebbar gelagert sind.

## Claims

1. An apparatus (1) for the entry of hot gas into a heating surface tube of a waste heat boiler having an outer tube (3) connected to the boiler wall, and further having a inner or inlet tube (5) that is connected to the outer tube (3) by means of a rounded reversing cap to form an inlet port for the hot gas and that is surrounded by the outer tube (3) at a given distance and that has a cylindrical or conically narrowing inflow section (17) and an outflow section (18) that is connected to the heating surface tube, and having a coolant transport tube (4) that is disposed between the outer tube (3) and the inner tube (5) and that extends into the vicinity of the reversing cap (6) wherein the transport tube (4) is connected in a fixed or non-fixed manner for transferring forces acting on the inner tube (5) to the outer tube (3) and therefrom to the boiler wall, both with the inner tube (5) as well as the outer tube (3), in each case with at least three connecting ribs (7, 8) distributed uniformly about the circumference.

2. The apparatus of claim 1, wherein the longitudinal axis (28) of the connecting ribs (7, 8) is in each case parallel to the apparatus longitudinal axis (2) and the connecting ribs (7, 8) are oriented radially.

3. The apparatus of claim 1 or 2, wherein the length (L) of the connecting rib (7, 8) takes up a portion of the length or the entire length of the transport tube (4) or of the apparatus (1).

4. The apparatus of one of claims 1 to 3, wherein the connecting ribs (7, 8) are disposed in the area of the conical or cylindrical inlet section (17).

5. The apparatus of one of claims 1 to 4, wherein the surface exposed to inflow (27) of the connecting ribs (7, 8) seen in the direction in which the coolant (20) flows are designed to be favorable to flow.

6. The apparatus of one of claims 1 to 5, wherein the surface exposed to outflow (27) of the connecting ribs (7, 8) seen in the direction in which the coolant (20) flows are designed to be favorable to flow.

7. The apparatus of one of claims 1 to 6, wherein with a fixed connection between the outer or inner tube (3, 5) and the transport tube (4) the connecting ribs (7, 8) between the inner tube (5) and the transport tube (4) seen in the direction in which the hot gas (19) flows are located upstream or downstream from the connecting ribs (7, 8) between the outer tube (3) and the transport tube (4).

8. The apparatus of one of claims 1 to 7, wherein on the cross section side, the connecting ribs (7) between the outer tube (3) and the transport tube (4) are located at an angular offset relative to the connecting ribs (8) between the inner tube (5) and the transport tube (4).

9. The apparatus of one of claims 1 to 8, wherein the annular flow cross section (23, 24) in the area of the respective connecting ribs (7, 8) is equal in size to the annular flow cross section (23, 24) upstream or downstream from the respective connecting ribs (7, 8).

10. The apparatus of one of claims 1 to 9, wherein with a non-fixed connection between the outer tube or inner tube (3, 5) and the transport tube (4), the transport tube (4) is provided with grooves (9, 10) on its outer and inner circumference in order to receive the corresponding connecting ribs (7, 8) of the inner or outer tube (3, 5).

11. The apparatus of claim 10, wherein the connecting ribs (7, 8) are disposed so that they are free to move within the grooves (9, 10) in a radial direction.

## Revendications

1. Dispositif (1) pour l'entrée de gaz chaud dans un tuyau de surface de chauffage d'une chaudière à récupération comprenant un tuyau extérieur (3) relié à la paroi de chaudière, un tuyau intérieur ou tuyau d'entrée (5) se raccordant au tuyau extérieur (3) par un capuchon inverseur (6) arrondi en formant une ouverture d'entrée (16) pour le gaz chaud et entouré à distance par le tuyau extérieur (3) avec une partie d'admission (17) cylindrique ou se rétrécissant en forme de cône et une partie d'évacuation (18) reliée au tuyau de surface de chauffage et un tuyau directeur de réfrigérant (4) disposé entre le tuyau extérieur (3) et le tuyau intérieur (5), qui s'étend jusqu'à la proximité du capuchon inverseur (6), **caractérisé en ce que,** pour la transmission de forces s'appliquant sur le tuyau intérieur (5) au tuyau extérieur (3) et à partir de là dans la paroi de chaudière, le tuyau directeur (4) est relié de façon amovible ou fixe aussi bien au tuyau intérieur (5) qu'au tuyau extérieur (3) à chaque fois avec au moins trois nervures de liaison (7,8) réparties régulièrement sur le pourtour.

2. Dispositif selon la revendication 1, **caractérisé en ce que** l'axe longitudinal (28) des nervures de liaison (7,8) est respectivement parallèle à l'axe longitudinal du dispositif (2) et les nervures de liaison (7,8) sont orientées radialement.

3. Dispositif selon la revendication 1 ou 2, **caractérisé en ce que** la longueur (L) de la nervure de liaison (7,8) occupe au moins une zone partielle de la longueur ou l'ensemble de la longueur du tuyau directeur (4) ou du dispositif (1).

4. Dispositif selon l'une quelconque des revendications 1 à 3, **caractérisé en ce que** les nervures de liaison (7,8) sont disposées dans la zone de la partie d'entrée (17) conique ou cylindrique.

5. Dispositif selon l'une quelconque des revendications 1 à 4, **caractérisé en ce que** la surface côté arrivée de l'écoulement (27) des nervures de liaison (7,8) est conçue de façon avantageuse au niveau de l'écoulement vu dans le sens d'écoulement du réfrigérant (20).

6. Dispositif selon quelconque des revendications 1 à 5, **caractérisé en ce que** la surface côté sortie (29) des nervures de liaison (7,8) est conçue de façon avantageuse au niveau de l'écoulement vu dans le sens d'écoulement du réfrigérant (20).

7. Dispositif selon l'une quelconque des revendications 1 à 6, **caractérisé en ce que,** lors d'une liaison fixe entre le tuyau extérieur ou le tuyau intérieur (3,5) et le tuyau directeur (4), les nervures de liaison (7,8) entre le tuyau intérieur (5) et le tuyau directeur (4) sont disposées, vu dans le sens d'écoulement du gaz chaud (19), en amont ou en aval des nervures de liaison (7,8) entre le tuyau extérieur et (3) et le tuyau directeur (4).

8. Dispositif selon l'une quelconque des revendications 1 à 7, **caractérisé en ce que,** côté section transversale, les liaisons de liaison (7) entre le tuyau extérieur (3) et le tuyau directeur (4) sont disposées avec un décalage angulaire par rapport aux nervures de liaison (8) entre le tuyau intérieur (5) et le tuyau directeur (4).

9. Dispositif selon l'une quelconque des revendications 1 à 8, **caractérisé en ce que** la section d'écoulement (23,24) en forme d'anneau circulaire dans la zone des nervures de liaison (7,8) respectives est sensiblement aussi grande que la section d'écoulement (23,24) en forme d'anneau circulaire en amont ou en aval des nervures de liaison (7,8) respectives.

10. Dispositif selon l'une quelconque des revendications 1 à 9, **caractérisé en ce que,** avec une liaison amovible entre le tuyau extérieur ou le tuyau intérieur (3,5) et le tuyau directeur (4), le tuyau directeur (4) est conçu sur son pourtour extérieur et son pourtour intérieur avec des rainures (9,10) pour le logement des nervures de liaison (7,8) respectives du tuyau intérieur ou du tuyau extérieur (3,5).

11. Dispositif selon la revendication 10, **caractérisé en ce que** les nervures de liaison (7,8) sont logées de façon coulissante à l'intérieur des rainures (9,10) dans le sens radial.
